# EUROPEAN PATENT SPECIFICATION

(11) **EP 4 385 702 B1**
(45) Date of publication and mention of the grant of the patent: **02.07.2025**
(21) Application number: 23214722.3
(22) Date of filing: 06.12.2023
(51) Int. Cl.: B29C 35/00, B29C 44/28, B29C 44/32, B29C 44/34, B29C 44/46, B29C 63/00, B29L 7/00

(54) **METHOD FOR PRODUCING A PANEL**
VERFAHREN ZUR HERSTELLUNG EINER PLATTE
PROCÉDÉ DE FABRICATION D'UN PANNEAU

(30) Priority: 15.12.2022 BE 202206015
(43) Date of publication of application: 19.06.2024
(73) Proprietor: Unilin, BV, 8710 Wielsbeke (BE)
(72) Inventor: VANDORPE, Johan, 8710 Wielsbeke (BE)
(74) Representative: Unilin Technologies

(56) References cited:
- EP-A2- 1 790 452
- WO-A1-2020/076529
- WO-A1-2021/046022
- GB-A- 2 481 693
- US-A- 3 367 818
- US-A1- 2007 092 688

## Description

The present invention relates to a method for producing an insulation panel made of polyisocyanurate (PIR).

WO2022/047102 describes a method for producing an insulation panel made of polyisocyanurate.

EP1790452A2 discloses a rigid polymeric insulating foam board comprises an upper facing, a lower facing and a foam layer between the upper and the lower facing. The foam sandwich is delivered into an oven and the continuous length of foam board exiting the oven is delivered through a curing station. The foam board is cut to length, trimmed, optimally re-bated, the cut board lengths are stacked and wrapped . A cooling station for the wrapped stacks comprises upper and lower stack conveyors. Scissors-type lifters are provided at the infeed and outfeed end to divert a stack to or from a cooling conveyor 51.

WO2020/076529A1 and WO2020/076539A1 describe examples of polyisocyanurate foam formulations which may be used for producing insulation panels made of polyisocyanurate.

In the production of polyisocyanurate insulation panels, a liquid polyisocyanurate foam formulation is used. The term liquid polyisocyanurate foam formulation is understood to mean a liquid which contains the reactants for forming a rigid polyisocyanurate. The liquid polyisocyanurate foam formulation comprises polyol, a di-isocyanate and one or more blowing agents, catalysts, silicones, flame retardants and water. During the production process, the polyol reacts with the di-isocyanate to form a rigid foam.

It is a specific object to provide a production method for polyisocyanurate insulation panels for producing panels of good constant quality, with a pleasing aesthetic appearance and an improved compressive strength in the thickness direction of the panel.

The invention relates to a method for producing a polyisocyanurate (PIR) insulation panel on a production line, wherein the produced insulation panel comprises a polyisocyanurate foam between two foils. The method is characterized in that the method comprises the step in which a liquid polyisocyanurate foam formulation is deposited on a foil, so that, at the position where the liquid polyisocyanurate foam formulation is deposited on the foil, the foil is moistened in an uninterrupted manner by the liquid polyisocyanurate foam formulation in the direction at right angles to the direction of production; and in that, at the position where the liquid foam formulation is deposited on the foil, the foil is supported by a heated table, wherein, in the method, the liquid polyisocyanurate foam formulation reacts to form a polyisocyanurate foam which is bonded to the foil.

An aesthetically more pleasing polyisocyanurate insulation panel is obtained by depositing the liquid polyisocyanurate foam formulation on a foil, so that the foil, at the position where the liquid foam formulation is deposited on the foil, is moistened in an uninterrupted manner in the direction at right angles to the direction of production; and because the foil is supported by a heated table at the position where the liquid foam formulation is deposited on the foil.

The liquid polyisocyanurate foam immediately continuously moistens the foil in the width direction. Due to the heated table, a reaction may occur immediately between the foam and the foil, as a result of which the foam is quickly continuously fixed on the foil across the entire width in a constant manner.

The use of the heated table which ensures that the foam is quickly fixed to the foil, is possible because the liquid foam no longer has to flow in the width direction, as this liquid foam moistens the foil immediately in an uninterrupted manner in the transverse direction when the liquid foam is deposited on the foil.

The result thereof is that no folds or creases can form in the foil during the production process, because the foam is directly bonded to the foil across the width. As a result thereof, an aesthetically more pleasing surface of the insulation panel is obtained.

In addition, insulation panels with a higher compressive strength in the thickness direction of the insulation panel are obtained. Since the polyisocyanurate foam on the production line can only expand in a vertical direction, the cells in the polyisocyanurate foam are oriented mainly in the thickness direction of the insulation panel. This ensures an improved compressive strength in the thickness direction of the insulation panel.

The foil may continuously be passed through the production line in the direction of production of the polyisocyanurate panel. This ensures a continuous production process for producing polyisocyanurate (PIR) insulation panels.

A preferred embodiment is characterized in that the heated table is arranged in a fixed position. This results in a simple design. The foil - with the liquid foam on top thereof - can be pushed across this heated table which is arranged in a fixed position.

A preferred embodiment of the method is characterized in that, at the position where the liquid polyisocyanurate foam formulation is deposited on the foil, the heated table has a temperature of at least 30°C, and preferably of less than 50°C, and more preferably of at least 35°C.

This choice of temperatures results in a good and uniform bonding of the foil to the foam across the width, while preventing an excessively quick reaction and expansion of the foam. In this case, the heated table ensures that the chemical reactions are locally accelerated, as a result of which the polyisocyanurate foam is fixed to the foil, whereas the upper foam mass is still able to continue to expand and react.

Preferably, the foil with the polyisocyanurate foam on top thereof is passed through an oven downstream of the heated table by means of and between a double belt. In the oven, the reactants in the polyisocyanurate foam can continue to react, so that the rigid foam of the polyisocyanurate insulation panel is formed correctly.

Preferably, the heated table comprises at least three sections in the direction of production; and more preferably at least five sections; and even more preferably at least six sections. The temperature in these sections can be adjusted separately.

This offers the advantage that the temperature of the heated table can be adjusted so as to increase in the direction of production. This ensures that the chemical reactions in the polyisocyanurate foam can be controlled in a suitable manner. As a result thereof, good bonding of the foam to the foil is achieved. Generally, this results in an insulation panel of good quality.

More preferably, the method uses sensors and control circuits to measure and control the temperature in each of these sections with respect to the desired temperature in the respective section.

These embodiments ensure homogeneous and constant properties of the insulation panel.

The temperature of the sections is preferably adjusted so as to increase in the direction of production. More preferably, the temperature is adjusted so as to increase across at least four, and preferably across at least five sections. This ensures better reactions of the polyisocyanurate foam, so that an insulation panel of better quality is obtained.

Preferably, the temperature in the last section of the heated table is less than 5°C below the temperature in the oven. More preferably, the temperature in the last section of the heated table is adjusted to be identical to the temperature of the oven. This ensures that the chemical reactions in the foam proceed well, so that an insulation panel of better quality is obtained. In addition, the production speed of the production line can be maximized.

Preferably, the temperature in the last section of the heated table is higher than 70°C and lower than 85°C, and preferably higher than 73°C. This ensures that the production speed of the production line can be maximized.

A preferred embodiment of the method is characterized in that the last section of the heated table upstream of the oven in the direction at right angles to the direction of production comprises three subsections, wherein the temperature in each of these subsections can be adjusted separately.

This makes it possible to adjust and/or control the temperature of the heated table in the last section across the width. This makes even better control of the properties and the visual appearance of the polyisocyanurate insulation panel possible.

A preferred embodiment of the method is characterized in that at least the last three sections of the heated table upstream of the oven each comprise three subsections in the direction at right angles to the direction of production, wherein the temperature in each of these subsections can be adjusted separately and controlled separately. This makes it possible to adjust and/or control the temperature of the heated table in these last sections across the width. This makes even better control of the properties and the visual appearance of the insulation panel possible.

More preferably, these three subsections comprise a central section and two edge sections, wherein the central section is at least double the width of each of the two edge sections. This is advantageous since edge effects might occur along the edges during the production of the insulation panel. Control of the temperature in these edge sections of the heated table makes is possible to reduce edge effects or even to prevent them altogether.

A preferred embodiment of the method is characterized in that the method uses sensors and control circuits to measure and control the temperature in each of the three subsections with respect to the desired temperature.

This is advantageous even in embodiments where the desired temperature in subsections is identical. In that case, the separate adjustment ensures that the desired temperature is actually achieved and maintained, so that an insulation panel of better quality is obtained.

A preferred embodiment of the method is characterized in that the temperature in each subsection which is intersected by the same line at right angles to the direction of production is adjusted to be identical. The separate adjustment then ensures that the desired temperature is actually achieved and maintained, so that an insulation panel of better quality is obtained.

A preferred embodiment of the method is characterized in that the liquid polyisocyanurate foam formulation flows at right angles to the direction of production of the polyisocyanurate panel from a discrete number of spray nozzles and is deposited on the foil by these. The various spray nozzles make it possible to position and distribute the liquid polyisocyanurate foam correctly across the width.

The method preferably uses a number of spraying units which are placed across the width of the production line for producing the polyisocyanurate insulation panel, wherein each of the spraying units comprises a central supply duct for supplying the liquid polyisocyanurate foam formulation. The central supply duct ends in a transverse distribution duct which passes the liquid polyisocyanurate foam formulation indirectly or directly to a discrete number of spray nozzles.

Such embodiments make it possible to distribute the liquid polyisocyanurate foam formulation efficiently and evenly across a number of spray nozzles. This ensures improved uniformity of the properties of the polyisocyanurate insulation panel.

In a preferred embodiment, each spraying unit comprises a number of spraying ducts, placed at right angles to the transverse distribution duct, wherein each spraying duct passes a separate stream of the liquid polyisocyanurate foam formulation from the transverse distribution duct to a spray nozzle, wherein the length of the spraying ducts decreases from spraying ducts which end in a centrally positioned spray nozzle or the centrally positioned spray nozzles, to the spraying ducts which end in the most distal spray nozzles with respect to the central supply duct.

Such embodiments have the advantage that an equal amount of liquid polyisocyanurate foam formulation flows from the various spray nozzles of the spraying unit. This ensures good uniformity of the insulation panel.

In a preferred embodiment, each of the spraying units comprises a second transverse distribution duct, wherein the second transverse distribution duct runs parallel to the transverse distribution duct and is connected thereto via a number of connecting ducts. The liquid polyisocyanurate foam formulation can flow from the transverse distribution duct into the second transverse distribution duct via the connecting ducts. The connecting ducts are placed transversely with respect to the transverse distribution duct. A discrete number of spray nozzles are positioned across the length of the second transverse distribution duct, wherein each spray nozzle is connected to the second transverse distribution duct via a spraying duct, placed transversely with respect to the second transverse distribution duct. In each case, two spraying ducts are arranged symmetrically with respect to each connecting duct.

This embodiment has the advantage that an equal amount of liquid polyisocyanurate foam formulation flows from the various spray nozzles of the spraying unit. This ensures good uniformity of the insulation panel. The second transverse distribution duct ensures that an equal amount of liquid polyisocyanurate foam formulation flows from the various spray nozzles.

More preferably, in each case two connecting ducts are arranged symmetrically with respect to the central supply duct. This ensures an even better uniform distribution of the liquid polyisocyanurate foam formulation across the various spray nozzles of the spraying unit.

A preferred embodiment is characterized in that each spraying unit comprises at least ten, and preferably at least twelve spray nozzles. This number ensures a precise distribution of the liquid polyisocyanurate foam formulation.

More preferably, the distance between every two successive spray nozzles in the spraying unit is at least 20 mm, and more preferably less than 30 mm. These embodiments are an example of an efficient and correct distribution of the liquid polyisocyanurate foam formulation, and correct deposition thereof on the foil, so that a high-quality insulation panel which is visually attractive is obtained.

Preferably, each spraying unit comprises one or more plastic injection-moulded parts.

Preferably, each spraying unit is composed of one or more plastic injection-moulded parts.

In a preferred embodiment, the spray nozzles are oriented in such a way that the liquid polyisocyanurate foam formulation flows vertically from the spray nozzles in the direction of the foil. This allows for an efficient deposition of the liquid polyisocyanurate foam formulation on the foil.

Preferably, the spray nozzles are circular. This ensures that the deposition of the liquid polyisocyanurate foam formulation on the foil can take place in a simple and efficient manner.

A preferred embodiment of the invention is characterized in that, upstream of the oven, a second foil is supplied above the foil with the polyisocyanurate foam on top thereof. The foil with the polyisocyanurate foam on top thereof and the second foil are passed through the oven by means of and between a double belt. In the method, the liquid polyisocyanurate foam formulation expands and reacts to form a polyisocyanurate foam bonded to and situated between the foil and the second foil.

More preferably, the vertical position of the running in of the second foil is determined by the fact that the second foil is passed under a roller, wherein the vertical position of this roller is controlled by means of a control circuit depending on a measurement of the height of the polyisocyanurate foam upstream of the position of the roller. This embodiment is particularly advantageous when producing insulation panels with a thickness of at least 100 mm.

This embodiment is advantageous because it ensures a correct positioning and correct bonding of the second foil to the polyisocyanurate foam, so that the insulation panel has a pleasing visual appearance even on the side of the second foil.

Preferably, the height measurement across the width is performed by means of an optical measurement, more preferably a laser is used for this purpose.

A preferred embodiment of the invention is characterized in that a paper strip is introduced next to the foil on both sides of the foil, wherein the paper strip is attached to the foil on both sides by means of adhesive tape, wherein, in the method, the paper strips are folded on both sides to a vertical position, wherein the polyisocyanurate foam bonds to these vertically oriented paper strips, and wherein these paper strips form the lateral edges of the produced polyisocyanurate insulation panel.

This embodiment has the advantage that the sides of the insulation panel are also formed correctly. In addition, the paper strips ensure that no liquid polyisocyanurate foam formulation is deposited or flows onto the heated table. This has to be prevented, because the foam would adhere to this heated table. In addition, the insulation panel would not contain the correct amount of material.

In one embodiment, the foil is or comprises an aluminium sheet. More preferably, the aluminium sheet has a thickness of more than 40 micrometres, and more preferably of less than 75 micrometres, more preferably of less than 60 micrometres.

In one embodiment, the foil is a laminate, wherein the laminate comprises:
- a plastic film - preferably on the outer side of the laminate and preferably for forming the outer surface of the insulation panel;
- one of more aluminium sheets, wherein each aluminium sheet has a thickness of at least 5 micrometres, and preferably less than 20 micrometres; and
- one of more layers of paper, preferably layers of Kraft paper.

The plastic film may be, for example, a polyethylene film or a polyvinylidene film.

Preferably, the liquid polyisocyanurate foam formulation comprises at least:
- a polyester polyol, preferably wherein the polyester polyol has a hydroxyl value of between 150 and 600 mg KOH/gram and a functionality of at least 2;
- polymeric methylene diphenyl diisocyanate (pMDI);
- a blowing agent, wherein the blowing agent comprises water and an additional blowing agent, for example pentane;
- a surfactant, for example a silicone surfactant and/or a non-silicone surfactant;
- a catalyst;
- optionally additives, for example flame-retardant additives;
wherein the ratio by mass of the polymeric methylene diphenyl diisocyanate (pMDI) with respect to the polyester polyol is at least 1.9.

Such embodiments make it possible to produce high-quality polyisocyanurate insulation panels using the method of the invention.

More preferably, the combination of the polyester polyol and the polymeric methylene diphenyl diisocyanate constitutes at least 85% by weight - and more preferably at least 90% by weight - of the liquid polyisocyanurate (PIR) foam formulation. Such embodiments make it possible to produce polyisocyanurate (PIR) insulation panels of good quality in embodiments of the method of the invention.

Preferably, the liquid polyisocyanurate foam formulation has a viscosity, measured at 25°C, of between 165 and 950 mPa.s. Such embodiments are advantageous because they further facilitate the complete moisturisation of the foil with the liquid polyisocyanurate foam formulation in the direction at right angles to the direction of production in an uninterrupted manner.

The method of the invention may be used, for example, to produce polyisocyanurate (PIR) insulation panels with a thickness of at least 40 mm, more preferably with a thickness of at least 60 mm, and even more preferably with a thickness of at least 100 mm.

The method of the invention is preferably used in the production of polyisocyanurate (PIR) insulation panels which have a thickness of at most 160 mm.

The speed of the production line is preferably between 10 and 45 metres per minute. Such embodiments produce polyisocyanurate insulation panels of even better quality.

In order to show the features of the invention in more detail, some preferred embodiments are described below by way of example and without being limited thereto, with reference to the accompanying drawings, in which:
Fig. 1 illustrates the method according to the invention in a continuous production line for producing polyisocyanurate insulation panels;
Fig. 2 shows a view of a part of the continuous production line from Fig. 1;
Fig. 3 shows the division of a heated table into sections, as may be used with the invention;
Fig. 4 shows an example of a spraying unit as may be used with the invention;
Fig. 5 shows another example of a spraying unit as may be used with the invention;
Fig. 6 shows a polyisocyanurate insulation panel as may be produced according to the method of the invention.

The reference numerals in the various figures have the same meaning.

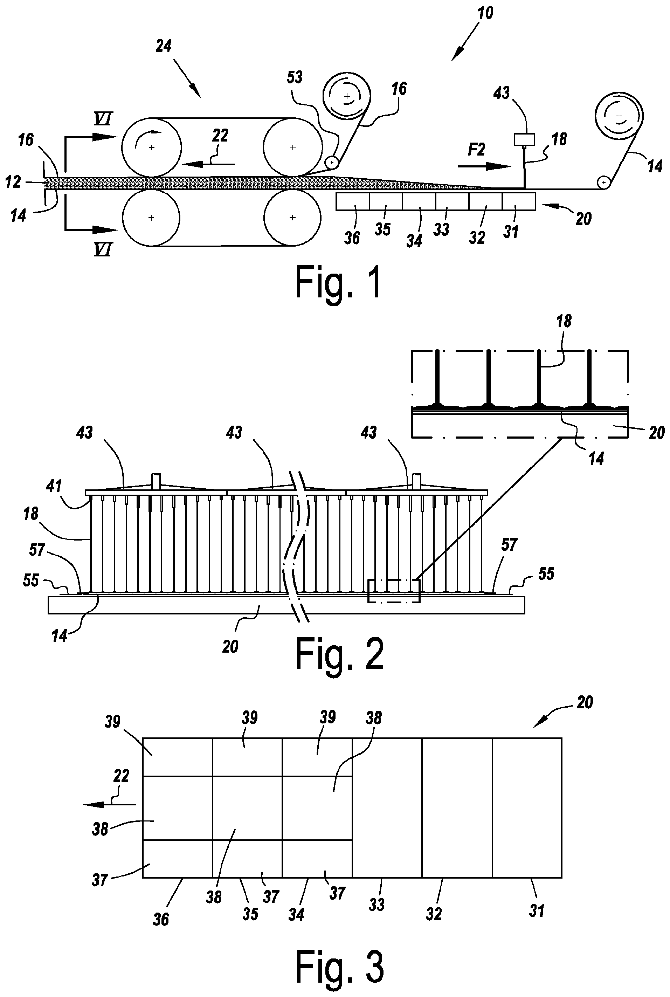

Fig. 1 illustrates an example of an embodiment of the method according to the invention on a continuous production line 10 for producing polyisocyanurate insulation panels. Fig. 2 shows the view along F2 of a part of the continuous production line from Fig. 1.

A liquid polyisocyanurate foam formulation 18 is deposited on a foil 14, so that the foil is moistened in an uninterrupted manner by the liquid polyisocyanurate foam formulation in the direction at right angles to the direction of production across the entire width at the position where the liquid foam formulation is deposited on the foil 14.

The example uses a number of spraying units 43 which are positioned across the width of the production line 10. Each of the spraying units 43 comprises a discrete number of spray nozzles 41 from which liquid polyisocyanurate foam formulation flows.

Thus, viewed at right angles to the direction of production of the polyisocyanurate panel, the liquid polyisocyanurate foam formulation flows from a discrete number of spray nozzles 41.

The spray nozzles are oriented in such a way that the liquid polyisocyanurate foam formulation flows vertically from the spray nozzles in the direction of the foil.

At the position where the liquid foam formulation 18 is deposited on the foil, the foil is supported by a heated table 20. The heated table 20 is arranged in a fixed position.

As is shown in Fig. 2, a paper strip 55 is introduced next to the foil on both sides of the foil 14. The paper strip 55 is attached to the foil 14 on both sides by means of adhesive tape 57. The paper strips 55 are folded on both sides to a vertical position in the production line, wherein the polyisocyanurate foam bonds to these vertical paper strips. These paper strips 55 form the lateral edges of the produced polyisocyanurate insulation panel.

In the method, the liquid polyisocyanurate foam formulation 18 expands and reacts to form a polyisocyanurate foam 12 bonded to the foil 14.

The foil 14 - with the liquid foam formulation on top thereof - is continuously passed through the production line in the direction of production 22 of the insulation panel.

At the position where the liquid polyisocyanurate foam formulation 18 is deposited on the foil 14, the heated table has a temperature of at least 30°C. Depending on the polyisocyanurate foam formulation, this temperature may be, for example 35°C or 45°C.

In the illustrated example, the heated table 20 comprises six sections 31, 32, 33, 34, 35, 36 in the direction of production 22, wherein the temperature in these six sections 31, 32, 33, 34, 35, 36 can be adjusted and controlled separately.

The foil 14 with the polyisocyanurate foam 18 on top thereof is passed through an oven downstream of the heated table 20 by means of and between a double belt 24.

Upstream of the oven - and thus before the double belt 24 -a second foil 16 is supplied above the foil 14 with the polyisocyanurate foam on top thereof. The foil 14 with the polyisocyanurate foam on top thereof and the second foil 16 are passed through the oven by means of and between the double belt 24. In the oven, the liquid polyisocyanurate foam formulation continues to expand and react to form a polyisocyanurate foam bonded to and situated between the foil 14, the second foil 16 and the two paper strips 55.

The vertical position of the running in of the second foil 16 is determined by the fact that the second foil 16 is passed under a roller 53. The vertical position of this roller 53 may be controlled by means of a control circuit depending on a measurement of the height of the polyisocyanurate foam upstream of the position of the roller 53.

The height measurement of the foam across the width may preferably be performed by means of an optical measurement, for example by using a laser.

Fig. 3 shows an example of the division into sections of the heated table 20 of the production line from Fig. 1. The heated table 20 from Fig. 1 (and as shown in detail in Fig. 3) comprises six sections 31, 32, 33, 34, 35, 36 in the direction of production. The temperature in these six sections 31, 32, 33, 34, 35, 36 can be adjusted separately and set to the desired temperature. To this end, these sections comprise sensors and control circuits.

The last three sections 34, 35, 36 upstream of the oven of the heated table 20 are each divided into three subsections 37, 38, 39 in the direction at right angles to the direction of production. These three subsections each comprise a central section 38 and two edge sections 37, 39. The central section 38 is at least double the width of each of the two edge sections 37, 39. In each of these nine subsections, the temperature can be adjusted and controlled separately with respect to the desired temperature. To this end, each subsection comprises sensors and a control circuit.

An example of temperature adjustment in the successive sections is: 35°C in the first section 31; 35°C in the second section 32; 45°C in the third section 33; 50°C in each subsection 37, 38, 39 of the fourth section 34; 65°C in each subsection 37, 38, 39 of the fifth section 34; and 65°C in each subsection 37, 38, 39 of the sixth section 36. In the example, the temperature in each subsection which is intersected by the same line at right angles to the direction of production is thus adjusted to be identical. This is not necessarily the case for the invention.

In the example, the temperature of each of the three subsections 37, 38, 39 of the last section 36 of the heated table 20 is adjusted to be identical to the temperature of the oven.

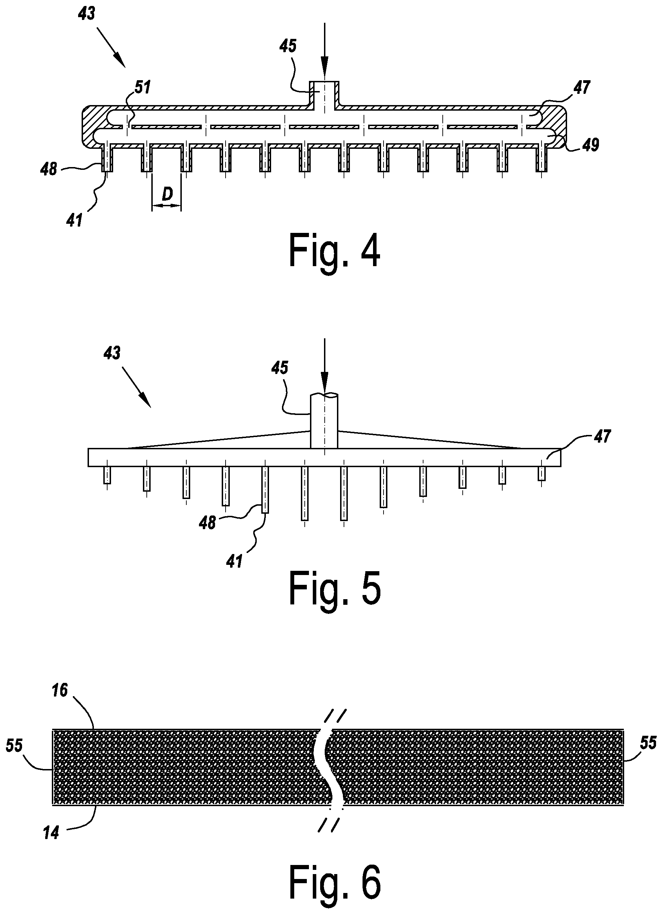

Fig. 4 shows an example of a spraying unit 43 as may be used in the invention. A number of these spraying units 43 are positioned across the width of the production line. This is shown in Fig. 2 by means of a different type of spraying unit, i.e. the type of spraying unit shown in Fig. 5. In the same way, the spraying units 43 from Fig. 4 may be used.

The spraying unit 43 from Fig. 4 comprises a central supply duct 45 for supplying the liquid polyisocyanurate foam formulation. The central supply duct 45 ends in a transverse distribution duct 47.

The spraying units 43 from Fig. 4 comprise a second transverse distribution duct 49. The second transverse distribution duct 49 runs parallel to the transverse distribution duct 47; and is connected thereto via six connecting ducts 51. The liquid polyisocyanurate foam formulation can flow from the transverse distribution duct 47 into the second transverse distribution duct 49 via the connecting ducts 51. The six connecting ducts 51 are placed transversely with respect to the transverse distribution duct 47. In each case, two connecting ducts 51 are arranged symmetrically with respect to the central supply duct 45.

The twelve spray nozzles 41 of the spraying unit 43 from Fig. 4 are positioned across the length of the second transverse distribution duct 49. Each spray nozzle 41 is connected to the second transverse distribution duct 49 via a spraying duct 48, placed transversely with respect to the second transverse distribution duct 49. In each case, two spraying ducts 48 are arranged symmetrically with respect to each connecting duct 51.

The twelve spray nozzles 41 from the example of spraying unit 43 from Fig. 4 are circular and have a diameter of 11 mm. The distance D between every two successive spray nozzles 41 of the spraying unit 43 is 23 mm.

The illustrated spraying unit 43 from Fig. 4 consists of two plastic injection-moulded parts which have been glued together.

Spraying units 43 as shown in Fig. 4 are preferably used for producing polyisocyanurate insulation panels having a thickness of at least 60 mm.

Fig. 5 shows another example of a spraying unit 43 as may be used with the invention. A number of these spraying units 43 may be positioned across the width of the production line. This is shown in Fig. 2.

The spraying unit 43 from Fig. 5 comprises a central supply duct 45 for supplying the liquid polyisocyanurate foam formulation. The central supply duct 45 ends in a transverse distribution duct 47 which passes the liquid polyisocyanurate foam formulation to twelve spray nozzles 41.

The liquid polyisocyanurate foam formulation may flow from the spray nozzles 41 at right angles to the direction of production of the polyisocyanurate panel. This is illustrated in Fig. 2.

The spraying unit 43 from Fig. 5 comprises a number of spraying ducts 48, placed at right angles to the transverse distribution duct 47. Each spraying duct 48 passes a separate stream of the liquid polyisocyanurate foam formulation from the transverse distribution duct 47 to a spray nozzle 41.

The length of the spraying ducts 48 decreases from spraying ducts which end in a centrally positioned spray nozzle or the centrally positioned spray nozzles, to the spraying ducts 48 which end in the most distal spray nozzles 41 with respect to the central supply duct 45.

The twelve spray nozzles 41 of the spraying unit from Fig. 5 are circular.

The spraying unit from Fig. 5 is composed of plastic injection-moulded parts.

Spraying units 43 as shown in Fig. 5 are preferably used for producing insulation panels having a thickness of 60 mm or less.

Fig. 6 shows a polyisocyanurate insulation panel as may be produced according to the method of the invention. The insulation panel comprises a rigid polyisocyanurate foam 12 between two foils 14, 16. The sides are formed by paper strips 55.

These polyisocyanurate insulation panels are produced in full width on a production line as shown in Fig. 1, in the example from Fig. 1 in a width of 1200 mm. If required, insulation panels may then be sawn to size from these insulation panels which are 1200 mm wide.

## Claims

1. Method for producing a polyisocyanurate (PIR) insulation panel on a production line, wherein the produced insulation panel comprises a polyisocyanurate foam (12) between two foils (14, 16),
wherein the method comprises the step in which a liquid polyisocyanurate foam formulation (18) is deposited on a foil (14); and
at the position where the liquid foam formulation is deposited on the foil, the foil is supported by a heated table (20),
wherein, in the method, the liquid polyisocyanurate foam formulation (18) reacts to form a polyisocyanurate foam (12) which is bonded to the foil (14), **characterized in that** at the position where the liquid polyisocyanurate foam formulation is deposited on the foil (14), the foil is moistened in an uninterrupted manner by the liquid polyisocyanurate foam formulation in the direction at right angles to the direction of production.

2. Method as in any of the preceding claims, **characterized in that**, at the position where the liquid polyisocyanurate foam formulation (18) is deposited on the foil (14), the heated table has a temperature of at least 30°C, and preferably of less than 50°C, and more preferably of at least 35°C.

3. Method as in any of the preceding claims, **characterized in that** the foil (14) with the polyisocyanurate foam (18) on top thereof is passed through an oven downstream of the heated table (20) by means of and between a double belt (24).

4. Method as in Claim 3, **characterized in that** the heated table (20) comprises at least three sections (31, 32, 33, 34, 35, 36) - and preferably at least five and more preferably at least six sections - in the direction of production, wherein the temperature in these sections (31, 32, 33, 34, 35, 36) can be adjusted separately.

5. Method as in Claim 4, **characterized in that** the method uses sensors and control circuits to measure and control the temperature in each of these sections (31, 32, 33, 34, 35, 36) with respect to the desired temperature in the respective section.

6. Method as in any of the Claims 3 - 5, **characterized in that** the temperature of these sections is adjusted so as to increase in the direction of production, preferably wherein the temperature is adjusted so as to increase across at least four, and preferably across at least five sections.

7. Method as in any of the preceding Claims 4 - 6, **characterized in that** the last section (36) of the heated table (20) upstream of the oven in the direction at right angles to the direction of production comprises three subsections (37, 38, 39), wherein the temperature in each of these subsections can be adjusted separately.

8. Method as in any of the preceding claims, **characterized in that** the liquid polyisocyanurate foam formulation flows at right angles to the direction of production of the polyisocyanurate panel from a discrete number of spray nozzles (41) and is deposited on the foil by these.

9. Method as in Claim 8, **characterized in that** the method uses a number of spraying units (43) which are placed across the width of the production line for producing the polyisocyanurate insulation panel, wherein each of the spraying units (43) comprises a central supply duct (45) for supplying the liquid polyisocyanurate foam formulation; wherein the central supply duct (45) ends in a transverse distribution duct (47) which passes the liquid polyisocyanurate foam formulation indirectly or directly to a discrete number of spray nozzles (41).

10. Method as in Claim 9, **characterized in that** each spraying unit (43) comprises a number of spraying ducts (48), placed at right angles to the transverse distribution duct (47), wherein each spraying duct (48) passes a separate stream of the liquid polyisocyanurate foam formulation from the transverse distribution duct (47) to a spray nozzle (41), wherein the length of the spraying ducts (48) decreases from spraying ducts which end in a centrally positioned spray nozzle or the centrally positioned spray nozzles, to the spraying ducts (48) which end in the most distal spray nozzles (41) with respect to the central supply duct (45).

11. Method as in Claim 9, **characterized in that** each of the spraying units (43) comprises a second transverse distribution duct (49), wherein the second transverse distribution duct (49) runs parallel to the transverse distribution duct (47) and is connected thereto via a number of connecting ducts (51), wherein the liquid polyisocyanurate foam formulation can flow from the transverse distribution duct (47) into the second transverse distribution duct (49) via the connecting ducts (51), wherein the connecting ducts (51) are placed transversely with respect to the transverse distribution duct (47), wherein the discrete number of spray nozzles (41) are positioned across the length of the second transverse distribution duct (49), wherein each spray nozzle (41) is connected to the second transverse distribution duct (49) via a spraying duct (48), placed transversely with respect to the second transverse distribution duct (49), wherein in each case two spraying ducts (48) are arranged symmetrically with respect to each connecting duct (51).

12. Method as in Claim 11, **characterized in that** in each case two connecting ducts (51) are arranged symmetrically with respect to the central supply duct (45).

13. Method as in any of the preceding claims, **characterized in that** a paper strip (55) is introduced next to the foil on both sides of the foil (14), wherein the paper strip (55) is attached to the foil (14) on both sides by means of adhesive tape (57), wherein, in the method, the paper strips (55) are folded on both sides to a vertical position, wherein the polyisocyanurate foam bonds to these vertically oriented paper strips, and wherein these paper strips (55) form the lateral edges of the produced polyisocyanurate insulation panel.

14. Method as in any of the preceding claims, **characterized in that** the liquid polyisocyanurate foam formulation comprises at least:
- a polyester polyol, preferably wherein the polyester polyol has a hydroxyl value of between 150 and 600 mg KOH/gram and a functionality of at least 2;
- polymeric methylene diphenyl diisocyanate (pMDI);
- a blowing agent, wherein the blowing agent comprises water and an additional blowing agent, for example pentane;
- a surfactant, for example a silicone surfactant and/or a non-silicone surfactant;
- a catalyst;
- optional additives, for example flame-retardant additives;
wherein the ratio by mass of the polymeric methylene diphenyl diisocyanate with respect to the polyester polyol is at least 1.9.

15. Method as in Claim 14, **characterized in that** the combination of the polyester polyol and the polymeric methylene diphenyl diisocyanate constitutes at least 85 % by weight - and preferably at least 90 % by weight - of the liquid polyisocyanurate foam formulation.

## Patentansprüche

1. Verfahren zur Herstellung eines Dämmstoffpaneels aus Polyisocyanurat (PIR) auf einer Produktionslinie, wobei das erzielte Dämmstoffpaneel einen Polyisocyanuratschaum (12) zwischen zwei Folien (14, 16) umfasst, wobei das Verfahren den Schritt umfasst, dass auf eine Folie (14) eine Formulierung (18) aus einem flüssigen Polyisocyanuratschaum aufgebracht wird; und wobei die Folie an der Stelle, an der die Formulierung aus einem flüssigen Polyisocyanuratschaum auf der Folie aufgebracht wird, von einem beheizten Tisch (20) getragen wird;
wobei in dem Verfahren die Formulierung (18) aus einem flüssigen Polyisocyanuratschaum umgesetzt wird, um einen Polyisocyanuratschaum (12) zu erzielen, der an der Folie (14) haftet; **dadurch gekennzeichnet, dass** an der Stelle, an der die Formulierung aus einem flüssigen Polyisocyanuratschaum auf die Folie (14) aufgebracht wird, die Folie in der Richtung senkrecht zur Produktionsrichtung ununterbrochen mit der Formulierung aus einem flüssigen Polyisocyanuratschaum befeuchtet wird.

2. Verfahren nach einem der vorhergehenden Ansprüche, **dadurch gekennzeichnet, dass** der beheizte Tisch an der Stelle, an der die Formulierung (18) aus einem flüssigen Polyisocyanuratschaum auf die Folie (14) aufgebracht wird, eine Temperatur von mindestens 30 °C, vorzugsweise unter 50 °C und besonders bevorzugt mindestens 35 °C besitzt.

3. Verfahren nach einem der vorhergehenden Ansprüche, **dadurch gekennzeichnet, dass** die Folie (14), auf der sich der Polyisocyanuratschaum (12) befindet, durch einen Ofen geführt wird, der sich stromabwärts des beheizten Tisches (20) befindet, mittels eines Doppelriemens (24) und innerhalb desselben.

4. Verfahren nach Anspruch 3, **dadurch gekennzeichnet, dass** der beheizte Tisch (20) in der Produktionsrichtung mindestens drei Abschnitte (31, 32, 33, 34, 35, 36) - und vorzugsweise mindestens fünf und mehr, insbesondere mindestens sechs Abschnitte - umfasst; wobei die Temperatur in diesen Abschnitten (31, 32, 33, 34, 35, 36) separat geregelt werden kann.

5. Verfahren nach Anspruch 4, **dadurch gekennzeichnet, dass** das Verfahren Sensoren und Regelkreise verwendet, um die Temperatur in jedem dieser Abschnitte (31, 32, 33, 34, 35, 36) relativ zu der gewünschten Temperatur in dem jeweiligen Abschnitt zu messen und zu regeln.

6. Verfahren nach einem der Ansprüche 3 bis 5, **dadurch gekennzeichnet, dass** die Temperatur dieser Abschnitte so geregelt wird, dass sie in der Produktionsrichtung ansteigt; wobei vorzugsweise die Temperatur so geregelt wird, dass sie zumindest durch den Ofen und vorzugsweise durch mindestens fünf Abschnitte ansteigt.

7. Verfahren nach einem der Ansprüche 4 bis 6, **dadurch gekennzeichnet, dass** der letzte Abschnitt (36) des beheizten Tisches (20) stromaufwärts des Ofens in einer Richtung senkrecht zur Produktionsrichtung drei Unterabschnitte (37, 38, 39) umfasst; wobei die Temperatur in jedem dieser Unterabschnitte separat geregelt werden kann.

8. Verfahren nach einem der vorhergehenden Ansprüche, **dadurch gekennzeichnet, dass** die Formulierung aus einem flüssigen Polyisocyanuratschaum senkrecht zur Produktionsrichtung des Paneels aus Polyisocyanurat aus einer diskreten Anzahl von Sprühdüsen (41) fließt und von diesen auf der Folie abgelegt wird.

9. Verfahren nach Anspruch 8, **dadurch gekennzeichnet, dass** das Verfahren eine Anzahl von Sprüheinheiten (43) verwendet, die über die Breite der Produktionslinie zur Herstellung des Dämmstoffpaneels aus Polyisocyanurat angebracht sind; wobei jede der Sprüheinheiten (43) eine zentrale Versorgungsleitung (45) umfasst, die dazu bestimmt ist, die Formulierung aus einem flüssigen Polyisocyanuratschaum zu versorgen; wobei die zentrale Versorgungsleitung (45) in eine quer verlaufende Verteilerleitung (47) mündet, die die Formulierung aus einem flüssigen Polyisocyanuratschaum indirekt oder direkt an eine diskrete Anzahl von Sprühdüsen (41) weiterleitet.

10. Verfahren nach Anspruch 9, **dadurch gekennzeichnet, dass** jede Sprüheinheit (43) eine Anzahl von Sprühleitungen (48) umfasst, die senkrecht zu der quer verlaufenden Verteilerleitung (47) angebracht sind; wobei jede Sprühleitung (48) einen separaten Strom der Formulierung aus einem flüssigen Polyisocyanuratschaum von der quer verlaufenden Verteilerleitung (47) zu einer Sprühdüse (41) weiterleitet; wobei die Länge der Sprühleitungen (48) von Sprühleitungen, die in eine zentral angebrachte Sprühdüse oder in die zentral angebrachten Sprühdüsen münden, bis zu den Sprühleitungen (48), die in die am weitesten distal gelegenen Sprühdüsen (41) münden, in Bezug auf die zentrale Versorgungsleitung (45) abnimmt.

11. Verfahren nach Anspruch 9, **dadurch gekennzeichnet, dass** jede der Sprüheinheiten (43) eine zweite quer verlaufende Verteilerleitung (49) umfasst; wobei sich die zweite quer verlaufende Verteilerleitung (49) parallel zu der quer verlaufenden Verteilerleitung (47) erstreckt und über eine Anzahl von Verbindungsleitungen (51) mit dieser verbunden ist; wobei die Formulierung aus einem flüssigen Polyisocyanuratschaum aus der quer verlaufenden Verteilerleitung (47) über die Verbindungsleitungen (51) in die zweite quer verlaufende Verteilerleitung (49) fließen kann; wobei die Verbindungsleitungen (51) quer zu der quer verlaufenden Verteilerleitung (47) angebracht sind; wobei die diskrete Anzahl von Sprühdüsen (41) entlang der Länge der zweiten quer verlaufenden Verteilerleitung (49) angebracht ist; wobei jede Sprühdüse (41) mit der zweiten quer verlaufenden Verteilerleitung (49) über eine Sprühleitung (48) verbunden ist, die in Querrichtung zu der zweiten quer verlaufenden Verteilerleitung (49) angeordnet ist; wobei jeweils zwei Sprühleitungen (48) symmetrisch zu jeder Verbindungsleitung (51) angeordnet sind.

12. Verfahren nach Anspruch 11, **dadurch gekennzeichnet, dass** jeweils zwei Verbindungsleitungen (51) symmetrisch zu der zentralen Versorgungsleitung (45) angebracht sind.

13. Verfahren nach einem der vorhergehenden Ansprüche, **dadurch gekennzeichnet, dass** ein Papierstreifen (55) neben der Folie auf beiden Seiten der Folie (14) angebracht wird; wobei der Papierstreifen (55) mittels eines Klebebands (57) auf beiden Seiten an der Folie (14) befestigt wird; wobei bei dem Verfahren die Papierstreifen (55) auf beiden Seiten gefaltet werden, um eine vertikale Position einzunehmen; wobei der Polyisocyanuratschaum an diesen Papierstreifen haftet, die in vertikaler Richtung ausgerichtet sind; und wobei diese Papierstreifen (55) die seitlichen Kanten des erzielten Dämmstoffpaneels aus Polyisocyanurat bilden.

14. Verfahren nach einem der vorhergehenden Ansprüche, **dadurch gekennzeichnet, dass** die Formulierung aus einem flüssigen Polyisocyanuratschaum mindestens Folgendes umfasst:
- ein Polyesterpolyol; wobei vorzugsweise das Polyesterpolyol einen Hydroxylwert zwischen 150 und 600 mg KOH/g und eine Funktionalität von mindestens 2 besitzt;
- ein polymeres Methylendiphenyldiisocyanat (pMDI);
- ein Treibmittel; wobei das Treibmittel Wasser und ein zusätzliches Treibmittel, z. B. Pentan, umfasst;
- ein Tensid, z. B. ein Tensid auf Silikonbasis und/oder ein nicht silikonisiertes Tensid;
- einen Katalysator;
- optionale Additive, z. B. flammhemmende Additive;
wobei das Massenverhältnis des polymeren Methylendiphenyldiisocyanats zu dem Polyesterpolyol mindestens 1,9 beträgt.

15. Verfahren nach Anspruch 14, **dadurch gekennzeichnet, dass** die Kombination aus dem Polyesterpolyol und dem polymeren Methylendiphenyldiisocyanat mindestens 85 Gew.-% - und vorzugsweise mindestens 90 Gew.-% - der Formulierung aus einem flüssigen Polyisocyanuratschaum ausmacht.

## Revendications

1. Procédé destiné à la production d'un panneau d'isolation à base de polyisocyanurate (PIR) sur une ligne de production, dans lequel le panneau d'isolation obtenu comprend une mousse de polyisocyanurate (12) entre deux feuilles (14, 16), dans lequel le procédé comprend l'étape au cours de laquelle on dépose sur une feuille (14) une formulation (18) d'une mousse liquide de polyisocyanurate ; et à l'endroit où la formulation de mousse liquide est déposée sur la feuille, la feuille est supportée par une table chauffée (20) ;
dans lequel, dans le procédé, on fait réagir la formulation de mousse liquide de polyisocyanurate (18) afin d'obtenir une mousse de polyisocyanurate (12) qui est collée à la feuille (14) ; **caractérisé en ce que**, à l'endroit où la formulation de mousse liquide est déposée sur la feuille (14), la feuille est humidifiée d'une manière ininterrompue par la formulation de mousse liquide de polyisocyanurate dans la direction perpendiculaire à la direction de production.

2. Procédé selon l'une quelconque des revendications précédentes, **caractérisé en ce que**, à l'endroit où la formulation de mousse liquide (18) est déposée sur la feuille (14), la table chauffée possède une température s'élevant à au moins 30 °C, et de préférence qui est inférieure à 50 °C, et de manière plus préférée qui s'élève à au moins 35 °C.

3. Procédé selon l'une quelconque des revendications précédentes, **caractérisé en ce que** l'on fait passer la feuille (14), sur laquelle se trouve la mousse de polyisocyanurate (18) à travers un four qui est situé en aval de la table chauffée (20) au moyen d'une double courroie (24) et à l'intérieur de celle-ci.

4. Procédé selon la revendication 3, **caractérisé en ce que** la table chauffée (20) comprend au moins trois parties (31, 32, 33, 34, 35, 36) - et de préférence au moins cinq et plus, de préférence au moins six parties - dans la direction de production ; dans lequel la température dans ces parties (31, 32, 33, 34, 35, 36) peut être réglée de manière séparée.

5. Procédé selon la revendication 4, **caractérisé en ce que** le procédé utilise des capteurs et des circuits de réglage dans le but de mesurer et de régler la température dans chacune de ces parties (31, 32, 33, 34, 35, 36) par rapport à la température désirée dans la partie respective.

6. Procédé selon l'une quelconque des revendications 3 à 5, **caractérisé en ce que** l'on règle la température de ces parties de façon à l'élever dans la direction de production ; de préférence dans lequel on règle la température de façon à l'élever au moins à travers le four, et de préférence à travers au moins cinq parties.

7. Procédé selon l'une quelconque des revendications 4 à 6, **caractérisé en ce que** la dernière partie (36) de la table chauffée (20), en amont du four dans une direction perpendiculaire à la direction de production comprend trois sous-parties (37, 38, 39) ; dans lequel la température, dans chacune de ces sous-parties, peut être réglée de manière séparée.

8. Procédé selon l'une quelconque des revendications précédentes, **caractérisé en ce que** la formulation de mousse liquide de polyisocyanurate s'écoule perpendiculairement à la direction de production du panneau à base de polyisocyanurate à partir d'un nombre discret de buses de pulvérisation (41) et est déposée sur la feuille par ces dernières.

9. Procédé selon la revendication 8, **caractérisé en ce que** le procédé utilise un certain nombre d'unités de pulvérisation (43) qui sont disposées sur la largeur de la ligne de production pour la production du panneau d'isolation à base de polyisocyanurate ; dans lequel chacune des unités de pulvérisation (43) comprend un conduit d'alimentation central (45) qui est destiné à alimenter la formulation de mousse liquide de polyisocyanurate ; dans lequel le conduit d'alimentation central (45) aboutit dans un conduit de distribution transversal (47) qui transmet la formulation de mousse liquide de polyisocyanurate de manière indirecte ou de manière directe à un nombre discret de buses de pulvérisation (41).

10. Procédé selon la revendication 9, **caractérisé en ce que** chaque unité de pulvérisation (43) comprend un certain nombre de conduits de pulvérisation (48), qui sont disposés perpendiculairement au conduit de distribution transversal (47) ; dans lequel chaque conduit de pulvérisation (48) transmet un courant séparé de la formulation de mousse liquide de polyisocyanurate à partir du conduit de distribution transversal (47) jusqu'à une buse de pulvérisation (41) ; dans lequel la longueur des conduits de pulvérisation (48) diminue à partir des conduits de pulvérisation, qui aboutissent dans une buse de pulvérisation disposée en position centrale ou dans les buses de pulvérisation disposées en position centrale, jusqu'aux conduits de pulvérisation (48) qui aboutissent dans les buses de pulvérisation les plus distales (41), par rapport au conduit d'alimentation central (45).

11. Procédé selon la revendication 9, **caractérisé en ce que** chacune des unités de pulvérisation (43) comprend un deuxième conduit de distribution transversal (49) ; dans lequel le deuxième conduit de distribution transversal (49) s'étend parallèlement au conduit de distribution transversal (47) et y est relié par l'intermédiaire d'un certain nombre de conduits de liaison (51) ; dans lequel la formulation de mousse liquide de polyisocyanurate peut s'écouler à partir du conduit de distribution transversal (47) jusque dans le deuxième conduit de distribution transversal (49) en passant par les conduits de liaison (51) ; dans lequel les conduits de liaison (51) sont disposés en direction transversale par rapport au conduit de distribution transversal (47) ; dans lequel le nombre discret de buses de pulvérisation (41) sont disposées sur la longueur du deuxième conduit de distribution transversale (49) ; dans lequel chaque buse de pulvérisation (41) est reliée au deuxième conduit de distribution transversal (49) par l'intermédiaire d'un conduit de pulvérisation (48) qui est disposé en direction transversale par rapport au deuxième conduit de distribution transversal (49) ; dans lequel, dans chaque cas, deux conduits de pulvérisation (48) sont disposés en position symétrique par rapport à chaque conduit de liaison (51).

12. Procédé selon la revendication 11, **caractérisé en ce que**, dans chaque cas, deux conduits de liaison (51) sont disposés en position symétrique par rapport au conduit d'alimentation central (45).

13. Procédé selon l'une quelconque des revendications précédentes, **caractérisé en ce qu'**une bande de papier (55) est insérée à côté de la feuille sur les deux côtés de la feuille (14) ; dans lequel la bande de papier (55) est fixée à la feuille (14) sur les deux côtés au moyen d'un ruban adhésif (57) ; dans lequel, dans le procédé, les bandes de papier (55) sont pliées sur les deux côtés pour prendre une position verticale ; dans lequel la mousse de polyisocyanurate vient se coller à ces bandes de papier qui sont orientées dans la direction verticale ; et dans lequel ces bandes de papier (55) forment les bords latéraux du panneau d'isolation à base de polyisocyanurate que l'on obtient.

14. Procédé selon l'une quelconque des revendications précédentes, **caractérisé en ce que** la formulation de mousse liquide de polyisocyanurate comprend au moins :
- un polyester polyol ; dans lequel le polyester polyol possède un indice hydroxyle qui se situe entre 150 et 600 mg de KOH/g et une fonctionnalité d'au moins 2;
- méthylène diphényl diisocyanate polymère (pMDI) ;
- un agent gonflant; dans lequel l'agent gonflant comprend de l'eau et un agent gonflant supplémentaire, par exemple du pentane ;
- un agent tensioactif par exemple un agent tensioactif à base de silicone et/ou un agent tensioactif qui n'est pas siliconé ;
- un catalyseur ;
- des additifs facultatifs, par exemple des additifs retardateurs des flammes ; dans lequel le rapport massique entre le méthylène diphényl diisocyanate polymère et le polyester polyol s'élève à au moins 1,9.

15. Procédé selon la revendication 14, **caractérisé en ce que** la combinaison du polyester polyol et du méthylène diphényl diisocyanate polymère constitue au moins 85 % en poids - et de préférence au moins 90 % en poids - de la formulation de mousse liquide de polyisocyanurate.
